# FASCICULE DE BREVET EUROPEEN

(11) **EP 3 205 553 B1**
(45) Date de publication et mention de la délivrance du brevet: **01.04.2020**
(21) Numéro de dépôt: 17156364.6
(22) Date de dépôt: 15.02.2017
(51) Int. Cl.: B61L 3/00, B61L 15/00, B61L 25/02

(54) **DISPOSITIF D'AIDE À LA CONDUITE POUR UN VÉHICULE FERROVIAIRE**
FAHRERASSISTENZVORRICHTUNG FÜR EIN SCHIENENFAHRZEUG
DRIVING ASSISTANCE DEVICE FOR A RAILWAY VEHICLE

(30) Priorité: 15.02.2016 FR 1651190
(43) Date de publication de la demande: 16.08.2017
(73) Titulaire: ALSTOM Transport Technologies, 93400 Saint-Ouen (FR)
(72) Inventeur: MIGLIANICO, Denis, 75009 PARIS (FR); HIBON, Samuel, 72000 LE MANS (FR); LE-ROUX, Ludovic, 17100 Saintes (FR)
(74) Mandataire: Lavoix

(56) Documents cités:
- EP-A1- 2 466 361
- EP-A1- 2 708 438
- EP-A2- 2 374 687
- WO-A1-2013/160327
- WO-A2-2010/149715
- DE-A1-102011 013 009
- US-B1- 8 509 971
- ANDREW RODEN: "Heads up !", INTERNATIONAL RAILWAY JOURNAL, SIMMONS-BOARDMAN PUBLISHING CORP, UNITED STATES, 1 janvier 2008 (2008-01-01), pages 30-31, XP001537933, ISSN: 0744-5326

## Description

La présente invention concerne un dispositif d'aide à la conduite pour un véhicule ferroviaire.

La consommation d'énergie d'un véhicule ferroviaire est directement liée à la vitesse de celui-ci. Ainsi, il existe des méthodes de détermination d'une vitesse optimale pour le véhicule ferroviaire, permettant de minimiser la consommation d'énergie de ce véhicule, tout en répondant aux exigences d'horaires qu'un véhicule ferroviaire doit habituellement respecter.

On connaît déjà, dans l'état de la technique, un dispositif d'aide à la conduite pour un véhicule ferroviaire, comportant des moyens de détermination d'une telle vitesse optimale. Le dispositif d'aide à la conduite comporte par ailleurs des moyens pour indiquer cette vitesse optimale au conducteur, afin qu'il la prenne en compte lorsqu'il conduit le véhicule. Tels dispositifs sont connus de DE 10 2011 013 009 A1 et EP 2 708 438 A1.

L'invention a notamment pour but d'améliorer un tel dispositif d'aide à la conduite, notamment en facilitant son utilisation pour le conducteur.

A cet effet, l'invention a notamment pour objet un dispositif d'aide à la conduite pour un véhicule ferroviaire, selon la revendication 1.

Un tel dispositif permet au conducteur de prendre en compte de manière très simplifiée la vitesse optimale notamment afin d'optimiser la consommation d'énergie du véhicule ferroviaire. En particulier, le dispositif selon l'invention indique directement au conducteur l'action à effectuer (notamment augmenter, maintenir ou réduire la vitesse), plutôt que d'indiquer seulement une vitesse cible que le conducteur aurait à considérer en plus des autres paramètres habituels à prendre en compte lorsqu'il conduit le véhicule.

Un dispositif d'aide à la conduite selon l'invention peut comporter en outre l'une ou plusieurs des caractéristiques suivantes, prises seules ou selon toutes combinaisons techniquement envisageables.
- Les moyens d'indication comportent un panneau d'affichage, propre à afficher les instructions de conduite.
- Les moyens d'indication comportent un dispositif d'affichage tête haute, propre à afficher les instructions de conduite dans un champ de vision du conducteur.
- Les moyens de comparaison comparent la vitesse instantanée avec un intervalle entourant la vitesse cible, et les moyens d'indication d'instructions de conduite sont configurés pour :
- indiquer une instruction d'augmentation de la vitesse lorsque la vitesse instantanée est en dessous de l'intervalle,
- indiquer une instruction de réduction de la vitesse lorsque la vitesse instantanée est au-dessus de l'intervalle,
- indiquer une instruction de maintien de la vitesse lorsque la vitesse instantanée se trouve dans l'intervalle.

L'invention concerne également un procédé d'aide à la conduite selon la revendication 6.

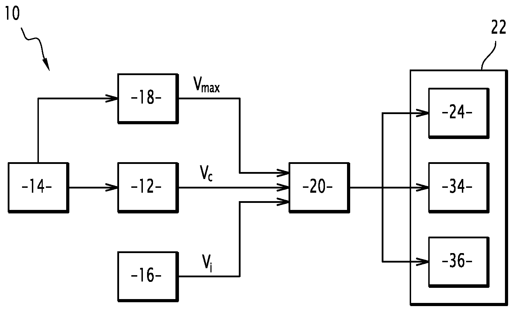

L'invention sera mieux comprise à la lecture de la description qui va suivre, donnée uniquement à titre d'exemple et faite en se référant à la figure annexée représentant schématiquement un dispositif d'aide à la conduite selon un exemple de mode de réalisation de l'invention.

On a représenté, sur la figure, un dispositif 10 d'aide à la conduite, destiné à équiper un véhicule ferroviaire.

Un véhicule ferroviaire étant destiné à circuler sur une voie ferrée, il suit un parcours prédéfini, si bien qu'il est possible de prévoir une vitesse optimale de déplacement du véhicule ferroviaire, notamment afin de minimiser la consommation d'énergie du véhicule, tout en prenant en compte les horaires que doit respecter ce véhicule.

Plus particulièrement, la voie ferrée peut être découpée en une pluralité de tronçons de voie, une vitesse optimale pouvant être définie sur chaque tronçon. En effet, la vitesse optimale est habituellement différente en fonction du tronçon sur lequel se trouve le véhicule ferroviaire, notamment en fonction du fait que le tronçon est en ligne droite ou en courbe, en descente ou en montée, etc. La longueur d'un tronçon de voie est choisie lors de la configuration du dispositif d'aide à la conduite 10, et peut être quelconque. On peut également prévoir divers tronçons de voie de longueurs différentes.

Ainsi, le dispositif d'aide à la conduite 10 selon l'invention comporte des moyens 12 de détermination d'une vitesse cible V_{c}, correspondant par exemple à une vitesse optimale permettant de limiter la consommation d'énergie du véhicule ferroviaire.

Comme indiqué précédemment, la vitesse optimale dépend du tronçon de voie sur lequel se trouve le véhicule ferroviaire, si bien qu'il est nécessaire de pouvoir déterminer sur quel tronçon de voie le véhicule ferroviaire se trouve. A cet effet, le dispositif d'aide à la conduite 10 comporte avantageusement des moyens de localisation 14, par exemple un dispositif de guidage par satellite.

Les moyens de détermination 12 peuvent être de tout type envisageable.

Conformément à un premier exemple, ces moyens de détermination 12 sont formés par une mémoire dans laquelle est stockée, pour chaque tronçon de voie, une vitesse cible V_{c} (notamment une vitesse optimale) prédéterminée correspondant à ce tronçon de voie. Ainsi, à tout moment, les moyens de localisation 14 permettent de déterminer sur quel tronçon de voie se trouve le véhicule ferroviaire, et les moyens de détermination 12 en déduisent la vitesse cible V_{c}.

Chaque vitesse cible V_{c} prédéterminée est calculée préalablement, en prenant en compte la consommation d'énergie du véhicule ferroviaire et les horaires devant être respectée par ce véhicule ferroviaire. D'autres caractéristiques peuvent être prises en compte pour la détermination de la vitesse cible V_{c}, notamment des caractéristiques du véhicule (telles que son nombre de voitures et sa longueur), des caractéristiques du tronçon de voie considéré (notamment s'il comporte au moins une montée et/ou au moins une descente, s'il est en ligne droite et s'il comporte des courbes, auquel cas les rayons de courbure de ces courbes peut également être pris en compte) et des conditions environnementales (par exemple la saison).

Conformément à un second exemple, les moyens de détermination 12 comportent des moyens de calcul en temps réel de la vitesse cible V_{c}, comprenant un algorithme de calcul déterminant la vitesse cible V_{c} en fonction des caractéristiques évoquées précédemment. De tels moyens de calcul en temps réel peuvent également prendre en compte un éventuel retard ou une avance sur les horaires que doit respecter le véhicule ferroviaire.

Conformément à un troisième exemple, les moyens de détermination 12 comportent des moyens d'apprentissage. Dans ce cas, lorsque le véhicule ferroviaire parcourt la voie ferrée, les moyens d'apprentissage enregistrent à chaque trajet la vitesse du véhicule ferroviaire sur chaque tronçon de voie considéré. Ensuite, au cours des trajets ultérieurs, les moyens d'apprentissage choisissent, sur chaque tronçon de voie, la vitesse qui semble la plus adaptée parmi celles enregistrées sur ce tronçon, cette vitesse la plus adaptée formant alors la vitesse cible V_{c}.

Le dispositif d'aide à la conduite 10 comporte par ailleurs des moyens classiques de commande de niveau de traction 16, généralement formés par un levier de commande de traction / freinage. Ce levier de commande 16 est actionné par le conducteur du véhicule ferroviaire, pour appliquer à ce véhicule ferroviaire un niveau de traction ou de freinage permettant de modifier la vitesse instantanée Vᵢ, souhaitée par le conducteur, en vue de l'approcher de la vitesse cible V_{c}.

Le dispositif d'aide à la conduite comporte également des moyens 18 de détermination d'une vitesse maximale Vₘₐₓ, en fonction du tronçon de voie sur lequel se trouve le véhicule ferroviaire.

Ces moyens 18 de détermination de vitesse maximale Vₘₐₓ sont liés aux moyens de localisation 14 indiquant sur quel tronçon de voie se trouve le véhicule ferroviaire, pour que les moyens 18 de détermination de vitesse maximale en déduisent quelle est la vitesse maximale Vₘₐₓ autorisée pour le véhicule ferroviaire.

Les moyens 18 de détermination de vitesse maximale comportent par exemple une base de données dans laquelle une vitesse maximale Vₘₐₓ prédéterminée respective est renseignée pour chaque tronçon de voie.

En variante, la vitesse maximale Vₘₐₓ pourrait être fournie en temps réel par un centre de commande centralisé, ou par des bornes disposées le long de la voie ferrée.

Le dispositif d'aide à la conduite 10 comporte par ailleurs des moyens 20 de comparaison de la vitesse instantanée Vᵢ du véhicule ferroviaire, dépendant des moyens de commande 16, avec la vitesse cible V_{c} renseignée par les moyens de détermination 12. Avantageusement, un intervalle de vitesse cible est défini autour de la vitesse cible V_{c}, et les moyens de comparaison 20 comparent la vitesse instantanée Vᵢ avec cet intervalle de vitesse cible.

Avantageusement, ces moyens de comparaison 20 comparent également la vitesse instantanée V_{I} avec la vitesse maximale Vₘₐₓ renseignée par les moyens de détermination 18.

Ces moyens de comparaison 20 fournissent les résultats des comparaisons à des moyens 22 d'indication d'instructions de conduite à destination du conducteur du véhicule ferroviaire.

Ces instructions de conduite comportent notamment des instructions de modification de la vitesse instantanée Vᵢ en vue de l'approcher de la vitesse cible V_{c}. Plus particulièrement, les moyens d'indication 22 sont configurés pour indiquer une instruction d'augmentation de la vitesse lorsque la vitesse instantanée Vᵢ est en dessous de l'intervalle de vitesse cible V_{c}, indiquer une instruction de réduction de la vitesse lorsque la vitesse instantanée Vᵢ est au-dessus de l'intervalle de vitesse cible V_{c}, et indiquer une instruction de maintien de la vitesse lorsque la vitesse instantanée Vᵢ se trouve dans l'intervalle de vitesse cible V_{c}.

Par ailleurs, lorsque la vitesse instantanée Vᵢ est supérieure à la vitesse maximale Vₘₐₓ, les moyens d'indication d'instructions 22 indiquent une instruction impérative de réduction de la vitesse.

Avantageusement, les moyens d'indication 22 indiquent également les valeurs de la vitesse instantanée Vᵢ, de la vitesse cible V_{c}, et de la vitesse maximale Vₘₐₓ.

Les moyens d'indication 22 peuvent comporter différents dispositifs d'indication envisageables.

Par exemple, les moyens d'indication 22 comportent un panneau d'affichage 24, notamment un écran d'affichage, propre à afficher les instructions de conduite..

En variante ou de manière complémentaire, les moyens d'indication 22 comportent un dispositif d'affichage tête haute 34, propre à afficher les instructions de conduite dans un champ de vision du conducteur. Un tel dispositif d'affichage tête haute 34 est connu en soi et ne sera donc pas décrit plus en détail.

Les instructions affichées par le dispositif d'affichage tête haute 34 sont par exemple identiques à celles affichées par le panneau d'affichage 24.

En variante, ou de manière complémentaire, les moyens d'indication d'instructions 22 comportent des moyens audio 36, indiquant de manière sonore des instructions de modification ou de maintien de la vitesse instantanée.

Le dispositif d'aide à la conduite 10 permet de réaliser un procédé d'aide à la conduite, comportant les étapes suivantes :
- une étape de détermination d'une vitesse cible V_{c} (par les moyens de détermination 12),
- une étape de comparaison d'une vitesse instantanée Vᵢ du véhicule ferroviaire avec la vitesse cible V_{c} (par les moyens de comparaison 20), et
- une étape d'indication d'instructions de conduite à destination du conducteur du véhicule ferroviaire, les instructions de conduite comportant des instructions de modification de la vitesse instantanée Vᵢ en vue de l'approcher de la vitesse cible V_{c} (par les moyens d'indication 22).

On notera que l'invention n'est pas limitée au mode de réalisation précédemment décrit, mais pourrait présenter diverses variantes.

En particulier, la vitesse cible pourrait être déterminée avec d'autres critères que la vitesse optimale évoquée précédemment. Par exemple, la vitesse cible pourrait prendre en compte uniquement les horaires à respecter, ou uniquement la consommation d'énergie.

## Revendications

1. Dispositif (10) d'aide à la conduite pour un véhicule ferroviaire, comprenant des moyens (12) de détermination d'une vitesse cible (V_{c}), comportant :
- des moyens (20) de comparaison d'une vitesse instantanée (Vᵢ) du véhicule ferroviaire avec la vitesse cible (V_{c}) ou avec un intervalle entourant la vitesse cible, et
- des moyens (22) d'indication d'instructions de conduite à destination d'un conducteur du véhicule ferroviaire, lesdites instructions de conduite comportant des instructions (25, 26, 28, 30) de modification de la vitesse instantanée (Vᵢ) en vue de l'approcher de la vitesse cible (V_{c}),
et dans lequel la vitesse cible est déterminée sur un tronçon de voie de l'une des manières suivantes :
- la vitesse cible est prédéterminée, par calcul préalable, prenant en compte la consommation d'énergie du véhicule ferroviaire et les horaires devant être respectés par ce véhicule ferroviaire, et de préférence des caractéristiques du véhicule, des caractéristiques du tronçon de voie considéré et des conditions environnementales ;
- la vitesse cible est calculée en temps réel, prenant en compte la consommation d'énergie du véhicule ferroviaire et les horaires devant être respectés par ce véhicule ferroviaire, et de préférence des caractéristiques du véhicule, des caractéristiques du tronçon de voie considéré et des conditions environnementales ; ou
- la vitesse cible est définie par des moyens d'apprentissage enregistrant à chaque trajet la vitesse du véhicule sur le tronçon de voie considéré, puis choisissant la vitesse la plus adaptée parmi celles enregistrées sur ce tronçon de voie,
**caractérisé en ce que** les moyens de comparaison (20) comparent également la vitesse instantanée (Vᵢ) avec une vitesse maximale (Vₘₐₓ), et les moyens d'indication d'instructions de conduite (22) sont configurés pour indiquer une instruction impérative (32) de réduction de la vitesse lorsque la vitesse instantanée (Vᵢ) est supérieure à la vitesse maximale (Vₘₐₓ),
et **en ce que** la vitesse maximale (Vₘₐₓ) est prédéterminée pour chaque tronçon de voie et stockée dans une base de données, fournie en temps réel par un centre de commande centralisé, ou par des bornes disposées le long de la voie ferrée.

2. Dispositif d'aide à la conduite (10) selon la revendication 1, dans lequel les moyens d'indication (22) comportent un panneau d'affichage (24), propre à afficher les instructions de conduite (25, 26, 28, 30).

3. Dispositif d'aide à la conduite (10) selon la revendication 1 ou 2, dans lequel les moyens d'indication (22) comportent un dispositif d'affichage tête haute (34), propre à afficher les instructions de conduite (25, 26, 28, 30) dans un champ de vision du conducteur.

4. Dispositif d'aide à la conduite (10) selon l'une quelconque des revendications précédentes, dans lequel les moyens d'indication d'instructions (22) comportent des moyens audio (36), propres à indiquer de manière sonore des instructions de modification ou de maintien de la vitesse instantanée.

5. Dispositif d'aide à la conduite (10) selon l'une quelconque des revendications précédentes, dans lequel les moyens de comparaison (20) comparent la vitesse instantanée (Vᵢ) avec un intervalle entourant la vitesse cible (V_{c}), et les moyens d'indication d'instructions de conduite (22) sont configurés pour :
- indiquer une instruction (26) d'augmentation de la vitesse lorsque la vitesse instantanée (Vᵢ) est en dessous de l'intervalle,
- indiquer une instruction (30) de réduction de la vitesse lorsque la vitesse instantanée (Vᵢ) est au-dessus de l'intervalle,
- indiquer une instruction (28) de maintien de la vitesse lorsque la vitesse instantanée (Vᵢ) se trouve dans l'intervalle.

6. Procédé d'aide à la conduite d'un véhicule ferroviaire, à l'aide d'un dispositif d'aide à la conduite (10) selon l'une quelconque des revendications précédentes, comportant :
- une étape de détermination d'une vitesse cible (V_{c}),
- une étape de comparaison d'une vitesse instantanée (Vᵢ) du véhicule ferroviaire avec la vitesse cible (V_{c}) ou un intervalle entourant la vitesse cible, et
- une étape d'indication d'instructions de conduite à destination d'un conducteur du véhicule ferroviaire, lesdites instructions de conduite comportant des instructions de modification de la vitesse instantanée (Vᵢ) en vue de l'approcher de la vitesse cible (V_{c}),
**caractérisé en ce que** l'étape de comparaison comporte également la comparaison de la vitesse instantanée (Vᵢ) avec une vitesse maximale (Vₘₐₓ), et l'étape d'indication d'instructions de conduite (22) indique une instruction impérative (32) de réduction de la vitesse lorsque la vitesse instantanée (Vᵢ) est supérieure à la vitesse maximale (Vₘₐₓ),
et **en ce que** la vitesse maximale (Vₘₐₓ) est prédéterminée pour chaque tronçon de voie et stockée dans une base de données, fournie en temps réel par un centre de commande centralisé, ou par des bornes disposées le long de la voie ferrée.

## Patentansprüche

1. Fahrassistenzvorrichtung (10) für ein Schienenfahrzeug, die Mittel (12) zur Bestimmung einer Zielgeschwindigkeit (V_{c}) aufweist, umfassend:
- Mittel (20) zum Vergleichen einer aktuellen Geschwindigkeit (Vᵢ) des Schienenfahrzeugs mit der Zielgeschwindigkeit (V_{c}) oder mit einem die Zielgeschwindigkeit umgebenden Intervall und
- Mittel (22) zum Anzeigen von Fahrinstruktionen für einen Fahrer des Schienenfahrzeugs, wobei die Fahrinstruktionen Instruktionen (25, 26, 28, 30) zur Änderung der aktuellen Geschwindigkeit (Vᵢ) aufweisen, um sie an die Zielgeschwindigkeit (V_{c}) anzunähern,
und bei der die Zielgeschwindigkeit auf einem Schienenabschnitt nach einer der folgenden Weisen bestimmt wird:
- die Zielgeschwindigkeit ist durch eine vorherige Rechnung vorbestimmt, wobei der Energieverbrauch des Schienenfahrzeugs und die von diesem Schienenfahrzeug zu berücksichtigenden Fahrpläne und vorzugsweise die Eigenschaften des Fahrzeugs, die Eigenschaften des betrachteten Schienenabschnitts und die Umgebungsbedingungen in Betracht gezogen werden;
- die Zielgeschwindigkeit durch Lernmittel definiert wird, die bei jeder Fahrt die Fahrzeuggeschwindigkeit auf dem betrachteten Schienenabschnitt aufzeichnen, wobei dann die geeignetste Geschwindigkeit aus den auf dem Schienenabschnitt aufgezeichneten Geschwindigkeiten gewählt wird,
**dadurch gekennzeichnet, dass** die Vergleichsmittel (20) auch die aktuelle Geschwindigkeit (Vᵢ) mit einer maximalen Geschwindigkeit (Vₘₐₓ) vergleichen und die Mittel (22) zum Anzeigen von Fahrinstruktionen ausgebildet sind, eine verbindliche Instruktion (32) zur Verringerung der Geschwindigkeit anzuzeigen, wenn die aktuelle Geschwindigkeit (Vᵢ) größer als die maximale Geschwindigkeit (Vₘₐₓ) ist,
und dass die maximale Geschwindigkeit (Vₘₐₓ) für jeden Schienenabschnitt vorbestimmt ist und in einer Datenbank gespeichert ist und in Echtzeit von einem zentralisierten Steuerzentrum oder von Pollern, die entlang des Schienenweges angeordnet sind, geliefert wird.

2. Fahrassistenzvorrichtung (10) nach Anspruch 1, bei der die Anzeigemittel (22) ein Anzeigepaneel (24) aufweisen, das geeignet ist, die Fahrinstruktionen (25, 26, 28, 30) anzuzeigen.

3. Fahrassistenzvorrichtung (10) nach Anspruch 1 oder 2, bei der die Anzeigemittel (22) eine Head-Up-Vorrichtung (34) aufweisen, die geeignet ist, die Fahrinstruktionen (25, 26, 28, 30) in einem Blickfeld des Fahrers anzuzeigen.

4. Fahrassistenzvorrichtung (10) nach einem beliebigen der vorhergehenden Ansprüche, bei dem die Mittel (22) zum Anzeigen von Instruktionen Audiomittel (36) aufweisen, die geeignet sind, akustisch Instruktionen zur Änderung oder zum Aufrechterhalten der aktuellen Geschwindigkeit anzuzeigen.

5. Fahrassistenzvorrichtung (10) nach einem beliebigen der vorhergehenden Ansprüche, bei der die Vergleichsmittel (20) die aktuelle Geschwindigkeit (Vᵢ) mit einem Intervall, das die Zielgeschwindigkeit (V_{c}) umgibt, vergleichen, und die Mittel (22) zum Anzeigen von Fahrinstruktionen ausgebildet sind:
- eine Instruktion (26) der Erhöhung der Geschwindigkeit anzuzeigen, wenn die aktuelle Geschwindigkeit (Vᵢ) unterhalb des Intervalls liegt,
- eine Instruktion (30) der Verringerung der Geschwindigkeit anzuzeigen, wenn die aktuelle Geschwindigkeit (Vᵢ) über dem Intervall liegt,
- eine Instruktion (28) des Aufrechterhaltens der Geschwindigkeit anzuzeigen, wenn die aktuelle Geschwindigkeit (Vᵢ) sich in dem Intervall befindet.

6. Fahrassistenzverfahren eines Schienenfahrzeugs mithilfe einer Fahrassistenzvorrichtung (10) nach einem beliebigen der vorhergehenden Ansprüche, umfassend:
- einen Schritt des Bestimmens einer Zielgeschwindigkeit (V_{c}),
- einen Schritt des Vergleichens einer aktuellen Geschwindigkeit (Vᵢ) mit der Zielgeschwindigkeit (V_{c}) oder einem die Zielgeschwindigkeit umgebenden Intervall,
- einen Schritt des Anzeigens von Fahrinstruktionen für einen Fahrer des Schienenfahrzeugs, wobei die Fahrinstruktionen Instruktionen zur Änderung der aktuellen Geschwindigkeit (Vᵢ) aufweisen, um sie an die Zielgeschwindigkeit (V_{c}) anzunähern
**dadurch gekennzeichnet, dass** der Schritt des Vergleichens auch den Vergleich der aktuellen Geschwindigkeit (Vᵢ) mit einer maximalen Geschwindigkeit (Vₘₐₓ) aufweist und der Schritt des Anzeigens von Fahrinstruktionen (22) eine verbindliche Instruktion (32) zur Verringerung der Geschwindigkeit anzeigt, wenn die aktuelle Geschwindigkeit (Vᵢ) größer als die maximale Geschwindigkeit (Vₘₐₓ) ist,
und dass die maximale Geschwindigkeit (Vₘₐₓ) für jeden Schienenabschnitt vorbestimmt ist und in einer Datenbank gespeichert ist und in Echtzeit von einem zentralisierten Steuerzentrum oder von Pollern, die entlang des Schienenweges angeordnet sind, geliefert wird.

## Claims

1. A device (10) for assisting driving for a railway vehicle, comprising means (12) for determining a target speed (V_{c}), including:
- means (20) for comparing an instantaneous speed (Vᵢ) of the railway vehicle with the target speed (V_{c}) or with an interval surrounding the target speed, and
- means (22) for indicating driving instructions intended for a driver of the railway vehicle, said driving instructions including instructions (25, 26, 28, 30) for modifying the instantaneous speed (Vᵢ) with view to bringing it closer to the target speed (V_{c}),
and in that the target speed is determined on a track segment in one of the following ways:
- the target speed is predetermined, by calculation beforehand, taking into account the energy consumption of the railway vehicle and the schedules which have to be observed by this railway vehicle, and preferably features of the vehicle, features of the relevant track segment and environmental conditions;
- the target speed is calculated in real time, taking into account the energy consumption of the railway vehicle and the schedules which have to be observed by this railway vehicle, and preferably features of the vehicle, features of the relevant track segment and environmental conditions; or
- the target speed is defined by learning means recording at each travel, the speed of the vehicle on the relevant track segment, and then by selecting the most adapted speed from among those recorded on this track segment
**characterized in that** the comparison means (20) also compare the instantaneous speed (Vᵢ) with a maximum speed (Vₘₐₓ), and the means for indicating driving instructions (22) are configured for indicating an imperative instruction (32) for reducing the speed when the instantaneous speed (Vᵢ) is greater than the maximum speed (Vₘₐₓ),
and **in that** the maximum speed (Vₘₐₓ) is predetermined for each track segment and stored in a database, provided in real time by a centralized control center, or by milestones positioned along the railway track.

2. The driving assistance device (10) according to claim 1, wherein the indication means (22) include a display panel (24), able to display the driving instructions (25, 26, 28, 30).

3. The driving assistance device (10) according to claim 1 or 2, wherein the indication means (22) include a head-up display device (34), able to display the driving instructions (25, 26, 28, 30) in a field of view of the driver.

4. The driving assistance device (10) according to any of the preceding claims, wherein the means for indicating instructions (22) include audio means (36), able to indicate with sound instructions for modifying or maintaining the instantaneous speed.

5. The driving assistance device (10) according to any of the preceding claims, wherein the comparison means (20) compare the instantaneous speed (Vᵢ) with an interval surrounding the target speed (V_{c}), and the means for indicating driving instructions (22) are configured for:
- indicating an instruction (26) for increasing the speed when the instantaneous speed (Vᵢ) is below the interval,
- indicating an instruction (30) for reducing the speed when the instantaneous speed (Vᵢ) is above the interval,
- indicating an instruction (28) for maintaining the speed when the instantaneous speed (Vᵢ) is found in the interval.

6. A driving assistance method of a railway vehicle, by means of a driving assistance device (10) according to any of the preceding claims, including:
- a step for determining a target speed (V_{c}),
- a step for comparing an instantaneous speed (Vᵢ) of the railway vehicle with the target speed (V_{c}) or an interval surrounding the target speed, and
- a step for indicating driving instructions intended for a driver of the railway vehicle, said driving instructions including instructions for modifying the instantaneous speed (Vᵢ) with view to bringing it closer to the target speed (V_{c}),
**characterized in that** the comparison step also comprises comparing the instantaneous speed (Vᵢ) with a maximum speed (Vₘₐₓ), and the indication step for indicating driving instructions (22) indicates an imperative instruction (32) for reducing the speed when the instantaneous speed (Vᵢ) is greater than the maximum speed (Vₘₐₓ),
and **in that** the maximum speed (Vₘₐₓ) is predetermined for each track segment and stored in a database, provided in real time by a centralized control center, or by milestones positioned along the railway track.
